# EUROPEAN PATENT APPLICATION

(11) **EP 4 700 378 A1**
(43) Date of publication of application: **25.02.2026**
(21) Application number: 24195994.9
(22) Date of filing: 22.08.2024
(51) Int. Cl.: G01N 23/203

(54) **ELECTRON COUNT AND ENERGY ENHANCED DIFFRACTION ANALYSIS**

(71) Applicant: FEI COMPANY, Hillsboro, OR 97124 (US)
(72) Inventor: HOLZER, Jakub, Brno (CZ); PETREK, Martin, Brno (CZ); VYSTAVEL, Tomá, Brno (CZ); STRAKA, Branislav, Brno (CZ)
(74) Representative: Boult Wade Tennant LLP

(57) **Abstract**

There is described a method of identifying phase characteristics of a sample. The method comprises obtaining backscattered electron data of the sample using a direct charged particle detector. The direct charged particle detector comprises an array of pixels and is configured to count the number of backscattered electrons, or to measure the energy of each backscattered electron, detected by each pixel of the array when an electron beam is incident upon the sample. The backscattered electron data comprises data sets, each data set comprising the number of, or the measured energies of, the backscattered electrons detected by each pixel of the array when the electron beam is incident upon a respective region of the sample. The method further comprises determining, for each data set, a respective statistical electron characteristic or a respective electron energy spectrum, and identifying a respective phase characteristic for at least some of the regions of the sample, based on the determined statistical electron characteristics or the determined electron energy spectra. A system for identifying phase characteristics in a sample is also described.

## Description

### FIELD OF THE INVENTION

The present invention relates to electron count and energy enhanced diffraction analysis, including methods and systems of identifying phase characteristics of a sample. In particular, the present invention relates to methods and systems of identifying crystalline phase characteristics of a sample using backscattered electron data to aid in distinguishing the phases of the sample.

### BACKGROUND

Electron backscatter diffraction is a well-known technique for characterising the crystallographic structure of samples. An electron beam incident on a sample interacts with atoms of the sample, causing the electrons to be scattered at varying angles as they leave the sample. These scattered electrons can be detected by a particle detector and processed to produce electron backscatter diffraction (EBSD) patterns. The EBSD patterns are made up of series of lines forming Kikuchi bands which provide crystallographic structure information.

These EBSD patterns provide a large variety of information about the sample's crystallographic structure. However, in samples comprising different phases, but which have the same crystal lattice, it is particularly hard to correctly distinguish between the different phases using just the EBSD patterns because the patterns are very similar. For example, elements having the same crystal lattice produce Kikuchi band thicknesses that are almost the same, making it challenging to determine which phase is which based on the EBSD patterns alone.

In conventional particle detectors, for example indirect electron detectors that use a scintillator (e.g., a phosphorescent screen), electrons scattered from the sample strike the phosphorescent screen and are converted to photons that can then be imaged using a camera.

"Phase Identification Using Electron Backscatter Diffraction in the Scanning Microscope" by J. R. Michael, Chapter 7 of Electron Backscatter Diffraction in Material Science, Springer, 2000, pages 75-89, describes the use of energy/wavelength dispersive x-ray spectrometry to determine unknown phases and the estimation of cell parameters from Kikuchi lines contained in EBSD patterns.

Conventional particle detectors are unable to directly detect the number, or measure the energies, of detected backscattered scattered electrons, and so such backscattering methods have not yet been used in crystalline phase differentiation.

Given the above-described issues, there is a need for improved electron backscattering analysis of samples to distinguish crystalline phases more accurately.

### SUMMARY

In a first aspect, there is a method of identifying phase characteristics of a sample. The method comprises obtaining backscattered electron data of the sample using a direct charged particle detector. The direct charged particle detector comprises an array of pixels and is configured to count the number of backscattered electrons, or to measure the energy of each backscattered electron, detected by each pixel of the array when an electron beam is incident upon the sample. The backscattered electron data comprises data sets, and each data set comprises the number of, or the measured energies of, the backscattered electrons detected by each pixel of the array when the electron beam is incident upon a respective region of the sample. The method further comprises determining, for each data set, a respective statistical electron characteristic or a respective electron energy spectrum, and then identifying a respective phase characteristic for at least some of the regions of the sample based on the determined statistical electron characteristics or the determined electron energy spectra.

Where the method comprises determining a respective statistical electron characteristic, the determined statistical electron characteristic may be one of, or may be based on one of a determined average electron count, a determined median electron count, a determined quantile electron count or a determined total electron count. The determined average electron count is the average value determined from all of the pixels of the array when the electron beam is incident upon a region of the sample. The determined median electron count is the median value determined from all of the pixels of the array when the electron beam is incident upon a region of the sample. The determined quantile electron count is a selected quantile determined from all of the pixels of the array when the electron beam is incident upon a region of the sample. The determined total electron count is the total value determined from all of the pixels of the array when the electron beam is incident upon a region of the sample.

The determined statistical electron characteristic may be dependent on chemical composition and/or crystal orientation of phases in the sample. For example, the determined statistical electron characteristic may increase with atomic number.

The step of identifying the respective phase characteristic for each of the regions of the sample, based on the determined statistical electron characteristic may comprise identifying the regions of the sample that have the same, or substantially the same, determined statistical electron characteristic.

The method may further comprise assigning a phase to at least one section of the sample based on the identified respective phase characteristics, and may further be based on reference phase data. Such reference phase data comprises statistical electron characteristics for known chemical compositions.

The step of obtaining the electron backscattered data may comprise directing the electron beam to be incident upon a first region of the sample, determining the number of backscattered electrons detected by each pixel of the array for the first region of the sample, generating a first data set comprising the number of backscattered electrons detected by each pixel of the array for the first region of the sample, moving the electron beam to be incident upon a second region of the sample, determining the number of electrons detected by each pixel of the array for the second region of the sample, and generating a second data set comprising the number of backscattered electrons detected by each pixel of the array for the second region of the sample.

The step of determining, for each data set, the respective statistical electron characteristic may comprise determining a first statistical electron characteristic for the first data set and determining a second statistical electron characteristic for the second data set.

The step of identifying the respective phase characteristic for at least some of the regions of the sample, based on the determined statistical electron characteristics, may comprises determining if the first statistical electron characteristic is the same, or substantially the same, as the second statistical electron characteristic. If the first statistical electron characteristic is the same, or substantially the same, as the second statistical electron characteristic, it is identified that the first and second regions of the sample are the same phase. If the first statistical electron characteristic is not the same, or not substantially the same, as the second statistical electron characteristic, it is identified that the first and second regions of the sample are different phases.

The step of assigning the phase to at least one section of the sample based on the identified respective phase characteristics may comprise, if the first statistical electron characteristic is the same, or substantially the same, as the second statistical electron characteristic, assigning the same phase to a section of the sample that includes the first and second regions of the sample, or if the first statistical electron characteristic is not the same, or not substantially the same, as the second statistical electron characteristic, assigning different phases to sections of the sample, a first phase being assigned to a first section of the sample that includes the first region of the sample, and a second, different phase being assigned to a second section of the sample that includes the second region of the sample.

Where the method comprises determining a respective electron energy spectrum, the determined electron energy spectrum may be a histogram of the measured energies of the backscattered electrons detected by each pixel of the array when the electron beam is incident upon a region of the sample. The determined electron energy spectrum may be dependent on chemical composition and/or crystal orientation of phases in the sample.

The step of identifying the respective phase characteristic for each of the regions of the sample, based on the determined electron energy spectra, may comprise identifying the regions of the sample that have at least one property of their determined electron energy spectrum that is the same, or substantially the same, as at least one corresponding property of the determined electron energy spectrum of other regions of the sample. The identifying may comprise comparing one or more properties of the energy spectra, including any of: the peak heights, skewness, the sum and the range.

The method may further comprise assigning a phase to at least one section of the sample based on the identified respective phase characteristics, and may be further based on reference phase data. The reference phase data comprises the energy spectra for known chemical compositions.

The step of obtaining the electron backscattered data may comprise directing the electron beam to be incident upon a first region of the sample, measuring the energies of backscattered electrons detected by each pixel of the array for the first region of the sample, generating a first data set comprising the measured energies of backscattered electrons detected by each pixel of the array for the first region of the sample, moving the electron beam to be incident upon a second region of the sample, measuring the energies of backscattered electrons detected by each pixel of the array for the second region of the sample, and generating a second data set comprising the measured energies of backscattered electrons detected by each pixel of the array for the second region of the sample.

The step of determining, for each data set, the respective energy spectrum may comprise determining a first energy spectrum for the first data set and a second energy spectrum for the second data set.

The step of identifying a respective phase characteristic for each of the regions of the sample, based on the determined energy spectra, may comprise determining if at least one property of the first energy spectrum is the same, or substantially the same, as at least one corresponding property of the second energy spectrum. If the at least one property of the first energy spectrum is the same, or substantially the same, as the at least one corresponding property of the second energy spectrum, it is identified that the first and second regions of the sample are the same phase. If the at least one property of the first energy spectrum is not the same, or not substantially the same, as the at least one corresponding property of the second energy spectrum, it is identified that the first and second regions of the sample are different phases.

The step of assigning the phase to at least one section of the sample based on the identified respective phase characteristics may comprises, if the at least one property of the first energy spectrum is the same, or substantially the same, as the at least one corresponding property of the second energy spectrum, assigning the same phase to a section of the sample that includes the first and second regions of the sample, or if the at least one property of the first energy spectrum is not the same, or not substantially the same, as the at least one corresponding property of the second energy spectrum, assigning different phases to sections of the sample, a first phase being assigned to a first section of the sample that includes the first region of the sample, and a second, different phase being assigned to a second section of the sample that includes the second region of the sample.

The sample may comprise more than one phase having the same crystal lattice.

In a second aspect, there is computer program comprising instructions that, when the computer program is executed by a computer, cause the computer to carry out the method described above.

In a third aspect, there is a system for identifying phase characteristics in a sample. The system comprises an electron beam generator configured to provide an electron beam towards a sample, a sample holder configured to hold the sample, and a direct charged particle detector comprising an array of pixels and configured to count the number of backscattered electrons, or to measure the energy of each backscattered electron, detected by each pixel of the array. The system further comprises a processing device communicatively coupled to the direct charged particle detector and configured to perform the method described above.

### BRIEF DESCRIPTION OF THE DRAWINGS

In order that the invention can be more readily understood, reference will now be made, by way of example only, to the accompanying drawings in which:
Figures 1a - 1c illustrate different types of crystal lattice structures.
Figure 2a illustrates a graph of the average electron counts for different elements.
Figure 2b illustrates a graph of the electron energy spectra for different elements.
Figure 3 illustrates an exemplary phase identification system for identifying phase characteristics of a sample, wherein the system has a standard EBSD geometry.
Figure 4 illustrates another exemplary phase identification system for identifying phase characteristics of a sample, wherein the system has a reflection Kikuchi diffraction geometry.
Figure 5 illustrates a method of identifying phase characteristics of a sample.
Figure 6 illustrates an exemplary electron energy histogram representing an electron energy spectra determined, for example, as part of the phase identification method of figure 5.
Figure 7 illustrates an exemplary method for obtaining the data for use in the phase identification method of figure 5.
Figure 8 illustrates an exemplary method of identifying phase characteristics of a sample using direct electron counting.
Figure 9a illustrates an exemplary sample for phase identification using the method of figure 8.
Figure 9b illustrates exemplary data sets determined using the phase identification method of figure 8, the data sets indicating the counted number of backscattered electrons for regions of the sample of figure 9a.
Figure 9c illustrates exemplary average electron counts for regions of the sample of figure 9a determined using the phase identification method of figure 8.
Figure 10 illustrates a phase map of an exemplary sample comprising different phases and the corresponding average electron counts for the phases.
Figure 11 illustrates an exemplary method of identifying phase characteristics of a sample using direct electron energy measurements.
Figures 12a - 12c illustrate electron backscattered energy spectra for different regions of a sample.
Figure 12d illustrates the respective regions of the sample for the backscattered electron energy spectra of figures 12a - 12c.
Figures 13a illustrates an exemplary sample for phase assignment.
Figure 13b illustrates an exemplary method of phase assignment of the sample of figure 13a.
Figure 13c illustrates another exemplary method of phase assignment of the sample of figure 13a.

### DETAILED DESCRIPTION OF THE INVENTION

An aim of the invention is to improve electron backscatter diffraction (EBSD) analysis of crystalline phases in a sample, particularly in (but not limited to) samples comprising phases which have the same crystal lattice but a different chemical composition. The described systems and methods provide fast and reliable information about the sample's crystalline structure that can assist with phase differentiation, and can be used to refine EBSD indexing. For example, such phase differentiation methods have applications in 4D scanning transmission electron microscopy (STEM) and transmitted Kikuchi diffraction (TKD) to name a few.

Indirect particle detectors (e.g., those with a scintillator) do not have the ability to directly count the number of, nor measure the energies of, detected backscattered electrons. Rather, they only compare brightness signals, and result in long, involved EBSD processes. For example, in such indirect detectors, the gain and brightness of the detector camera must be set, which has a direct influence on the resulting brightness. As such, it is necessary to keep the same settings for all the experiments. Also, often, these necessary settings are not suitable for accurate EBSD analysis.

On the other hand, direct charged particle detectors, such as a direct electron detector, do not suffer from the same issues. These direct detectors are able to directly count the number of, and/or measure the energies of, detected backscattered electrons, and so can advantageously aid in identifying phase characteristics of a sample in order to distinguish crystalline phases.

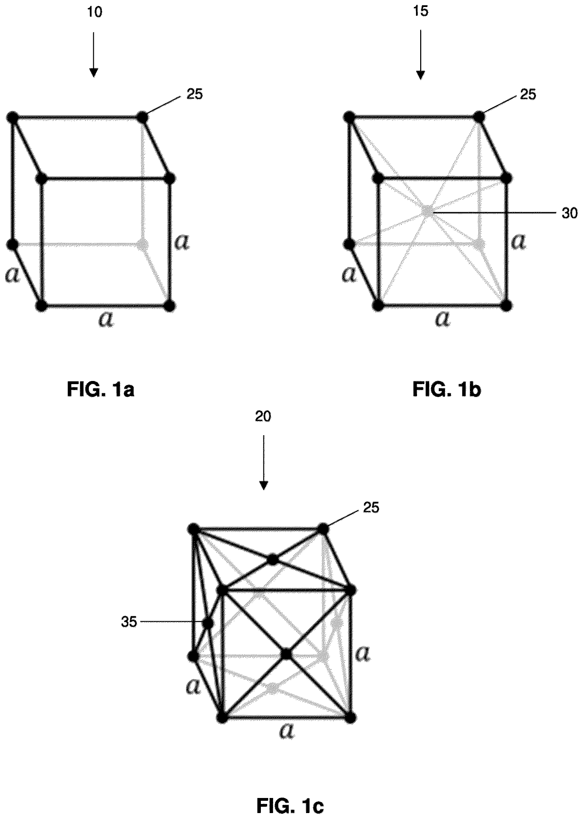

The yield of backscattered electrons from a sample is dependent on two main factors - elemental composition and crystal orientation of the sample. Direct charged particle detectors are set up for the determination of crystallographic orientation with high precision. However, even when using direct charged particle detectors for EBSD analysis, it is very difficult to correctly differentiate between phases of a sample that have the same crystal lattice because the phases produce EBSD patterns that are almost identical to each other. For example, aluminium, copper, nickel, and gold can all have the same crystal lattice (face-centered cubic lattice - see figure 1c). These four elements have Kikuchi band thicknesses of 0.2123, 0.2387, 0.2455, and 0.2113 mm respectively (at 20 keV, 10 mm detector distance). Even with the most accurate of direct charged particle detectors, accurately distinguishing between these elements based on the EBSD patterns alone is not possible. Hence, an improved method for identifying crystallographic phases in samples comprising phases with the same crystal lattice is required.

Samples of interest may comprise one or more distinct crystallographic phases, dependent on their chemical composition and lattice structures. For example, a sample may be formed of one element with a constant spatial crystal orientation, e.g., a sample comprising solely of aluminium with a face-centered cubic lattice. Other samples may be formed of several different elements, with one or more different crystal orientations, e.g., a sample comprising aluminium and copper with a face-centered cubic lattice, or a sample comprising aluminium with a face-centered cubic lattice and iron with both face-centered cubic and body-centered cubic lattices. Many other types of sample also exist.

Figures 1a - 1c show exemplary crystal cubic lattices, where the lattice angles are all 90° and the lattice sides are all the same length a. For example, a primitive cubic lattice 10 is shown in figure 1a, a body-centered cubic lattice (BCC) 15 is shown in figure 1b, and a face-centered cubic lattice (FCC) 20 is shown in figure 1c. The primitive cubic lattice 10 has one lattice point 25 at each corner of the cube, and so each unit cell of the primitive cubic lattice 10 has one lattice point. A body-centered cubic lattice 15 has one lattice point 25 at each corner of the cube, and one lattice point 30 at the centre, and so each unit cell of the body-centered cubic lattice 15 has two lattice points. A face-centered cubic lattice 20 has one lattice point 25 at each corner of the cube and one lattice point 35 on each face of the cube, and so each unit cell of the face-centred cubic lattice 20 has four lattice points. There is a variation in backscattered electrons produced by samples with differing lattice structures because the different lattices have different atomic placements, and therefore different atomic planes. The different atomic planes produce different EBSD patterns.

Different elements can also produce different amounts of backscattered electrons due to their varying atomic number. For example, elements with a higher atomic number produce more backscattered electrons. This is because elements with a higher atomic number have a higher density of particles, resulting in more electrons being scattered. Similarly, elements with a lower atomic number have a lower density of particles, resulting in less electrons being scattered. These differences can be used to aid in distinguishing phases that have the same crystallography (and so produce almost identical EBSD patterns).

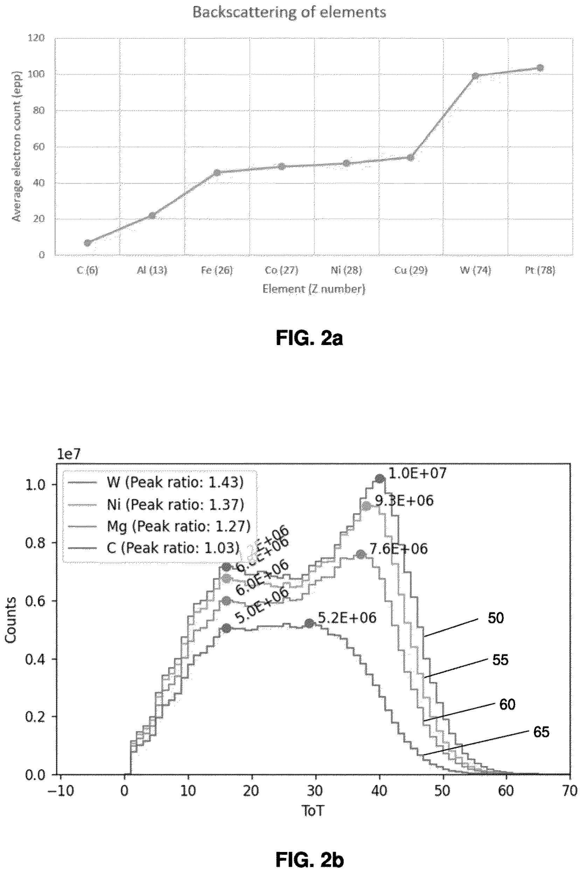

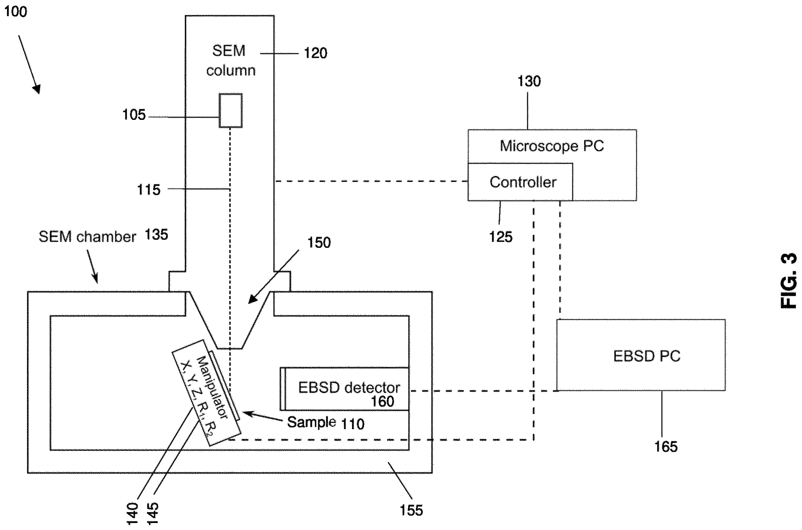

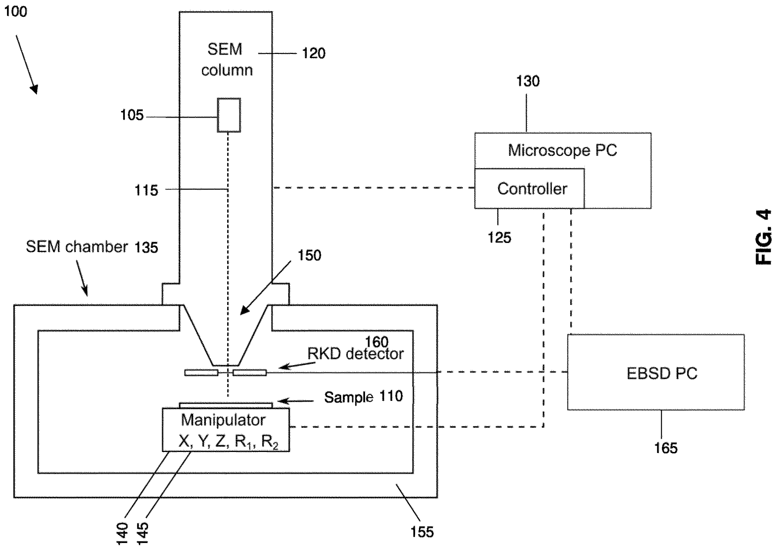

Figure 2a illustrates an example of the backscattering atomic number dependency. In particular, figure 2a is a graph of the average electron count (*epp,* average electron per pixel) for different elements under the same EBSD experimental conditions - carbon, aluminium, iron, cobalt, nickel, copper, tungsten and platinum. The average electron count information is determined from electron backscattering experiments. Exemplary methods of obtaining backscattered electron data and determining the average electron counts from this data are described below. A direct charged particle detector (such as the direct charged particle detectors shown in figures 3 and 4) is used to collect the data. As can be seen in figure 2a, the average electron count of elements of a lower atomic number is less than elements with a higher atomic number. For example, the average electron count for aluminium, which has an atomic number 13, is about 20 epp, whereas the average electron count for copper, which has an atomic number of 29, is about 55 epp. This dependency is advantageous for identifying phase characteristics in order to distinguish crystalline phases of a sample.

Similarly, atomic number affects the measured energies of detected electrons, and so, advantageously, this energy dependency can also be used for identification of the phase characteristics in order to distinguish crystalline phases of a sample. Figure 2b illustrates an example of a graph with energy histograms for different elements - tungsten 50, nickel 55, magnesium 60 and carbon 65. Backscattered electron energy spectra information is determined in a similar way as the average electron count information mentioned above. Exemplary methods of obtaining backscattered electron data and determining the electron energy spectra from this data are described below. A direct charged particle detector (such as the direct charged particle detectors shown in figures 3 and 4) is used to collect the data. As can be seen from figure 2b, the electron energy spectra (represented by the histogram plots) vary with atomic number. The counts on the y axis denote the amount of energies in each energy bin of the histogram. TOT on the x axis represents the "Time over Threshold", in which the direct charged particle detector measures energy, i.e., the time necessary to discard the charge created by the incident electron in one pixel. The peak ratio values can be used in analysis to differentiate the sample's phases.

The phase characteristics of a sample can therefore be determined using direct electron counting and/or by directly measuring the detected electron's energies, as will be described in more detail below.

### Phase identification system

Figures 3 and 4 illustrate exemplary phase identification systems 100 for identifying phase characteristics of a sample. System 100 obtains backscattered electron data that can be used to characterise a sample of interest and identify its crystalline phase characteristics.

The system 100 comprises an electron beam source 105 that provides a beam of monochromatic, or substantially monochromatic, electrons towards a sample 110, along a beam axis 115. The beam of electrons may instead be non-monochromatic, but the obtained data will be less precise. The electrons may have an energy selected from a range of energies, e.g., an energy between 3-50 keV. The electron source 105 may be included in an electron beam column 120 as part of a scanning electron microscope (SEM) setup. The electron beam column 120 is configured to adjust the electron beam to focus to a point on the sample 110 and to scan the electron beam over the whole surface of the sample 110, for example line by line or section by section. A controller 125 in communication with the electron beam column 120 controls the movement of the electron beam, and start/stopping of the electron beam. The controller 125 may be part of a SEM computer 130.

A chamber 135, typically a vacuum chamber, houses a sample holder 140. The sample holder 140 may be part of a manipulator 145 that is used to translate and rotate the sample 110 into a desired position and orientation. In this way, the sample 110 may be placed in a selectable angle relative to the beam axis 115, for example, at 70 degrees to the beam axis 115. In other examples, the angle may be between 0 and 80 degrees. The electron beam column 120 is aligned with an aperture 150 in the chamber housing 155 to allow the beam of electrons to pass into the chamber 135 and contact the sample 110.

The system 100 also comprises a directed charged particle detector 160, such as a direct electron detector, positioned within the chamber 135 that is configured to detect electrons scattered from the sample 110. In other words, the direct charged particle detector 160 directly detects the electrons that have undergone an interaction with the sample 110 without any intermediary steps (i.e., there is no scintillator). A signal representative of the scattered electrons is acquired by the direct charged particle detector 160 and sent to a processing device for processing. In this embodiment, the processing device comprises a computer system including a computer 165 and/or a field-programmable gate array and/or an application-specific integrated circuit (ASIC). In the following description, the processing device is described as comprising the computer 165.

In some examples, the system 100 is set up in a standard EBSD geometry, as shown in figure 3, where the direct charged particle detector 160 is positioned to the side of the sample 110 and the sample 110 is tilted at an angle, e.g., at 70 degrees. In other examples, as shown in figure 4, the system 100 is set up in a reflection Kikuchi diffraction (RKD) geometry, where the direct charged particle detector 160 is positioned directly below the pole piece and parallel with the sample 110.

The direct charged particle detector 160 may comprise a front-end (not shown) configured to process the acquired signal into data. The front-end may pre-process the data and send to the computer 165 for further processing. The front-end can also provide power to the direct charged particle detector 160 and handles cooling, if necessary. The direct charged particle detector 160 may also comprise a feedthrough (not shown) through which are routed the communication links that allow the data transfer from the chamber 135 to the computer 165.

The direct charged particle detector 160 also includes a detector chip 170 that comprises a semiconductor sensor chip (e.g., a silicon chip) bonded to an electronic readout chip. The semiconductor sensor chip includes an array of pixels, e.g., 256 x 256 pixels or 512 x 448 pixels. Examples of such detector chips 180 include the Timepix 1 and the Timepix 2 (see https://indico.cern.ch/event/895924/contributions/4020698/attachments/ 2119022/3565847/Vertex2020MC.pdf), the Timepix3 (see https://kt.cern/technologies/ timepix3) and the Timepix4 (see https://indico.cern.ch/event/591299/contributions/ 2423187/attachments/1393307/2123191/Timepix4_specs.pdf and https://cds.cern.ch/ record/2825271), which are available from, for example, ADVACAM (https://advacam .com/), ASI (https://www.amscins.com/index.html), and Quantum Detectors (https://quantumdetectors.com/). Another example of a direct charged particle detector 160 is the Electron Microscope Pixel Array Detector, EMPAD (https://assets.thermofisher .com/TFS-Assets/MSD/Datasheets/EMPAD-Datasheet.pdf).

Some direct charged particle detectors 160, for example those including the Timepix 1 and Timepix 2 chips, can operate in a counting mode that counts each electron incident on the pixels as 1. The counting mode is frame-based, i.e., the electron counts for each of the pixels are collected in a predefined time interval, a frame, and the count for each pixel is read out at the end of the frame. Thus, the readout from each pixel describes how many electrons were counted in the timeframe over which the readout was collected.

Other direct charged particle detectors 160, for example those including the Timepix3 or Timepix4 chips, can also operate in a data driven mode. In the data driven mode, information about the detected electrons is read out for each detected electron as and when the direct charged particle detector 160 detects the electron striking a pixel, rather than accumulating a total count for each pixel to be readout at the end of a frame. When operating in the data driven mode, these direct charged particle detectors 160 can measure the electron energy deposited in each pixel by each incident electron. As the electron strikes the pixel, the direct charged particle detector 160 measures a value that is proportional to the energy of the incident electron. This measured energy value is called the time over threshold (TOT) value, *E*. At the same time as measuring the time over threshold value, the direct charged particle detector 160 may also measure the detection time of the detected electron, for example the time of arrival, *t*, of the detected electron (i.e., the timestamp of when the electron struck the pixel). These measured data can be included in a vector *(x, t, E)* for each detected electron that also includes the pixel position x of the pixel that detected the electron.

The measured data for each detected electron are sent from the direct charged particle detector 160 to the computer 165 for processing. These data are sent after each and every electron strike when the direct charged particle detector 160 is operating in the data driven mode, i.e., information about each and every detected electron, such as the vector *(x, t, E),* is provided in real time to the computer 165. This is in contrast to the direct charged particle detector 160 operating in the counting mode, where information is sent as a full frame read-out after a set measurement time period.

The computer 165 is in communication with the direct charged particle detector 160, e.g., via the feedthrough 175, and receives the collected electron data for processing and analysis. The computer 165 comprises a processor and memory for storing computer readable instructions. The computer 165 may be any suitable computer configured to operate software for processing and analysing the data. Optionally, the field-programmable gate array (FPGA) may be in communication with the direct charged particle detector 160 and computer 165 for processing the received signal. In some examples, the computer 165 is configured to carry out the below-mentioned method steps. In other examples, the FPGA is configured to carry out the method steps. The controller 125 may also be in communication with the computer 165 and/or FPGA so as to control the processing. The computer 165 may be a separate computer to the SEM computer 130 or may be part of the SEM computer 130. Whilst a SEM system setup is described above and shown in figures 3 and 4, the system may instead be another suitable type of system, such as transmission electron microscopy (TEM) or scanning transmission electron microscopy (STEM) systems.

### Phase identification method

It is possible to distinguish crystalline phases using direct electron counting and/or by directly measuring the detected electron's energies. Both methods can be carried out using the phase identification system 100 described above, or using another suitable setup comprising a direct charged particle detector as described previously.

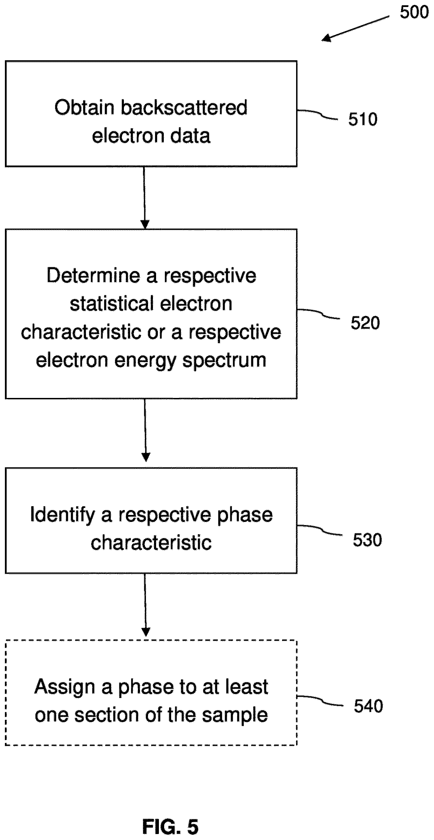

Figure 5 illustrates a method 500 of identifying phase characteristics of a sample, such as sample 110. Such identification facilitates the distinction between crystalline phases of the sample 110, particularly where the sample 110 comprises more than one phase having the same crystal lattice.

Backscattered electron data of the sample 110 is obtained 510 using the direct charged particle detector 160. An exemplary method 700 of obtaining the data is described below. The data could also be obtained using other suitable backscattering methods. As discussed previously, the direct charged particle detector 160 comprises an array of pixels and (depending on whether the method makes use of direct electron counting, direct electron energy measurements, or both) is configured to count the number of backscattered electrons, and/or to measure the energy of each backscattered electron, detected by each pixel of the array when the electron beam is incident upon the sample 110. The detected electrons are collected at the direct charged particle detector 160 as part of a signal and sent as data to the computer 165 for processing. The obtained backscattered electron data comprise a plurality of data sets. Each data set comprises the number of, and/or the measured energies of, the backscattered electrons detected by each pixel of the array when the electron beam is incident upon a respective region of the sample 110. For example, a first data set representative of a first region of the sample 110 comprises the number of, and/or the measured energies of, the backscattered electrons detected by each pixel of the array when the electron beam is incident upon the first region of the sample 110. Similarly, a second data set representative of a second region (that is different to the first region) of the sample 110 comprises the number of, and/or the measured energies of, the backscattered electrons detected by each pixel of the array when the electron beam is incident upon the second region of the sample 110, and so on across the different regions of the sample 110.

After obtaining 510 the backscattered electron data, a respective statistical electron characteristic or a respective electron energy spectrum is determined 520 for each of the data sets. Whether a respective statistical electron characteristic and/or a respective electron energy spectrum is determined is dependent upon if the data sets comprise the number of, and/or the measured energies of, the detected backscattered electrons.

The determined statistical electron characteristic provides a statistical representation of the obtained backscattered electron data for varying regions of the sample 110. The determined statistical electron characteristic may be one of, or may be based on one of, a determined average electron count, a determined median electron count, a determined quantile electron count, or a total electron count.

In the case where the determined statistical electron characteristic is the determined average electron count, the determined average electron count describes the average value of the number of detected electrons that is determined from all of the pixels of the array when the electron beam is incident upon a region of the sample 110. The average value may be the mean average or the modal average. To determine the average electron count for a region of the sample 110, the number of backscattered electrons detected in each pixel of the array in a set measurement time period are first counted over the set measurement time period, and then an average (e.g., either mean average or modal average) for the whole array of pixels is calculated to provide an average electron count value representative of the electron backscattering from that region of the sample 110.

In the case where the determined statistical electron characteristic is the determined median electron count, the median electron count is determined in a similar way to the average electron count, but instead of calculating the mean or modal average value, the median value for the whole array of pixels is determined and provides a median electron count value representative of the electron backscattering from that region of the sample 110. Advantageously, the determined median electron count is less prone to outliers.

In the case where the determined statistical electron characteristic is the determined quantile electron count, the determined quantile electron count is determined by selecting one or more parts of a distribution representing the detected electrons. For example, a histogram of the obtained backscattered data for the whole array of pixels may be plotted to obtain the distribution of the electrons. Then, the histogram may be divided into parts, e.g., four equal parts and any one of the first to fourth quartile used as the first to fourth quantile electron count value representative of the electron backscattering from that region of the sample 110. Any other suitable division of the histogram may also be made, e.g., halves, thirds, fifths, tenths and so on. Using the determined quantile electron count, outliers can be excluded, leading to more accurate results.

In the case where the determined statistical electron characteristic is the determined total electron count, the total electron count describes the total value of the number of detected electrons determined from the whole array of pixels when the electron beam is incident upon that region of the sample 110. The total electron count for a region of the sample 110 is determined by counting the number of backscattered electrons detected in each pixel of the array in a set measurement time period, thereby providing a total value representative of the electron backscattering from that region of the sample 110.

The determined statistical electron characteristic is dependent on chemical composition and/or crystal orientation of phases in the sample 110. For example, the determined statistical electron characteristic increases with atomic number, atomic weight and/or material density, e.g., platinum has a higher atomic weight (atomic number 78) than aluminium (atomic number 13) and so will produce a higher determined statistical electron characteristic. This is because samples with a higher atomic number have a higher density of particles, resulting in more electrons being scattered. See for example, figure 2a showing the differences between average electron counts for varying elements of different atomic numbers. Accordingly, if a sample 110 is known to have two phases, it is possible to assign the phase with the higher statistical electron characteristic as being comprised of the element with the higher atomic number, and vice versa.

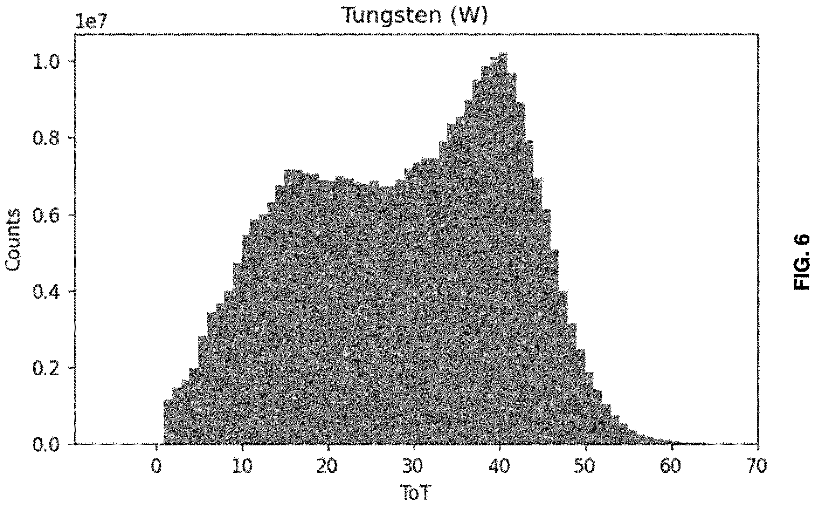

Additionally or alternatively to using the statistical electron characteristic (which is determined by directly counting the number of detected electron), direct electron energy measurements can be used to determine an electron energy spectrum for each of the data sets. The determined electron energy spectrum can be a histogram of the measured energies of the backscattered electrons detected by each pixel of the array when the electron beam is incident upon a region of the sample 110. Similar to the statistical electron characteristic, the determined electron energy spectrum is dependent on the chemical composition and/or crystal orientation of phases in the sample 110. The electron energy spectra are determined by first measuring the electron energy deposited in each pixel by each incident electron and then forming a histogram of the measured energies. An exemplary electron energy histogram for tungsten is shown in figure 6. The counts on the y axis denote the amount of energies in each energy bin of the histogram. TOT on the x axis represents the "Time over Threshold", in which the direct charged particle detector 160 measures the energy. As mentioned with respect to figure 2b, the time over threshold is the time necessary to discard the charge created by the incident electron in one pixel. The larger the energy of the electron, the larger the deposited charge, and so the larger the time over threshold necessary to discard it.

Following the determination step 520 of method 500, a respective phase characteristic for each of at least some, up to all of, the regions of the sample 110 is identified 530, based on the determined statistical electron characteristics or the determined electron energy spectra. The respective phase characteristic represents a characteristic of the phase in the region of interest of the sample 110. For example, a phase characteristic may be an indication of whether or not regions of the sample 110 generate the same statistical electron characteristic or the same property/parameter(s) of the electron energy spectra, which can then be used to distinguish phases of the sample. E.g., the phase characteristic can indicate that a first group of regions of the sample 110 all generated (approximately) the same statistical electron characteristic, or that the first group of regions all generated (approximately) the same property/parameter(s) of the electron energy spectra. Therefore, it can be determined from the phase characteristic that these regions of the first group all have the same phase because they generated (approximately) the same statistical electron characteristic/property of the electron energy spectra. On the other hand, regions of the sample 110 generating different statistical electron characteristics, or regions generating different properties/parameters of the electron energy spectra, will result in different determined phase characteristics. The different phase characteristics signify different phases of the sample 110 (in other words, the different phases of the sample 110 are identified by the variation in determined statistical electron characteristic/electron energy spectra property values across the regions). In further examples, the phase characteristic may be representative of other phase properties of the sample 110, such as the backscattering coefficient.

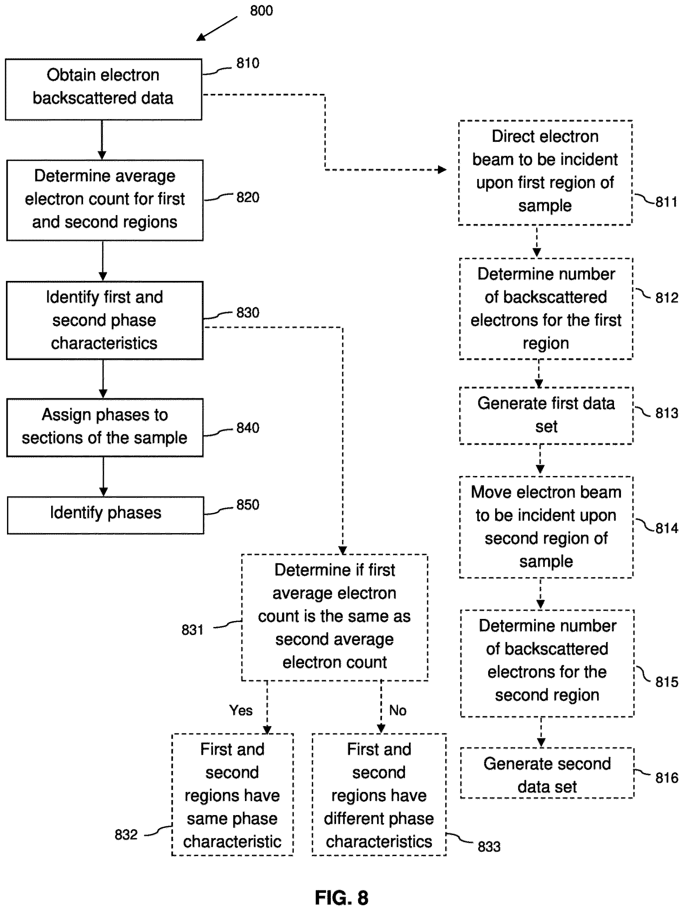

For example, where the method uses direct electron counting, the identifying step 530 of method 500 may comprise identifying the regions of the sample 110 that have the same, or substantially the same, determined statistical electron characteristic. Two regions with a determined statistical electron characteristic value within about 5% or so of each other are considered to have determined statistical electron characteristics that are the same or substantially the same. Further details of the identification step 530 are given below in reference to the methods of figures 8 to 10, but in one simple example, sample region A with a determined average electron count of 20.1 epp and sample region B with a determined average electron count of 20.3 epp are identified as regions with the same, or substantially the same, determined average electron count because their determined average electron counts are within 5% of each other. In other examples, determined statistical electron characteristic values of a user-set percentage or amount, e.g., between about 1 - 20% of each other (such as 1%, 2%, 5%, 10%, 15%, 20% etc.) or higher/lower, are also considered to be the same or substantially the same. The percentage, amount and/or range that provides an accurate representation of the same or substantially the same determined statistical electron characteristic value depends on the sample material(s). For example, initial experiments can be run on samples of known composition(s) in order to determine an idea of the percentage(s)/amount(s)/range(s) that accurately reflects the material. Any suitable percentage, amount and/or range can be chosen and such percentages/amounts/ranges may be predetermined, predicted, fixed and/or adjustable, dependent on the sample information of interest.

In another example, where the method uses direct electron energy measurements, the identifying step 530 of method 500 comprises identifying regions of the sample 110 that have at least one property of their determined electron energy spectrum that is the same, or substantially the same, as at least one corresponding property of the determined electron energy spectrum of another region (or other regions) of the sample 110. In a similar manner to the direct electron counting process, the electron energy histograms are assessed for their similarities as part of the identification step 503. This identifying step 530 may comprise comparing one or more properties or parameters of the energy spectra, including, but not limited to, any of: the peak heights, skewness, the sum and the range, so as to assess the similarities. For example, a function (e.g., one or more of gaussian/Lorentzian/other such functions) is fitted to each determined electron energy spectrum using a standard fitting method. Then, properties of the fitted function(s) are compared across the spectra to identify the properties that are the same, or substantially the same, in sample regions. The fitted properties may include, but are not limited to, the expected value (i.e., middle of the peak), variance, FWHM and peak height (i.e., amplitude). These comparisons can be carried out using diffraction methods, such as neutron diffraction. If the determined electron energy spectra are assumed to include a number of gaussian peaks, a least square minimization method can be used to fit the gaussian peaks to each of the determined spectra to obtain the various properties for each peak, e.g., the expected value, variance, FWHM and peak height. The fitted property value(s) of a first determined electron energy spectra (for a first region of the sample 110) is then compared with the corresponding fitted property value(s) of a second determined electron energy spectra (for a second region of the sample 110) for similarities, and in some cases, with other determined electron energy spectra of other regions. Two regions of the sample 110 with fitted property values within about 10% or so of each other are considered to have determined electron energy spectra that are the same, or substantially the same.

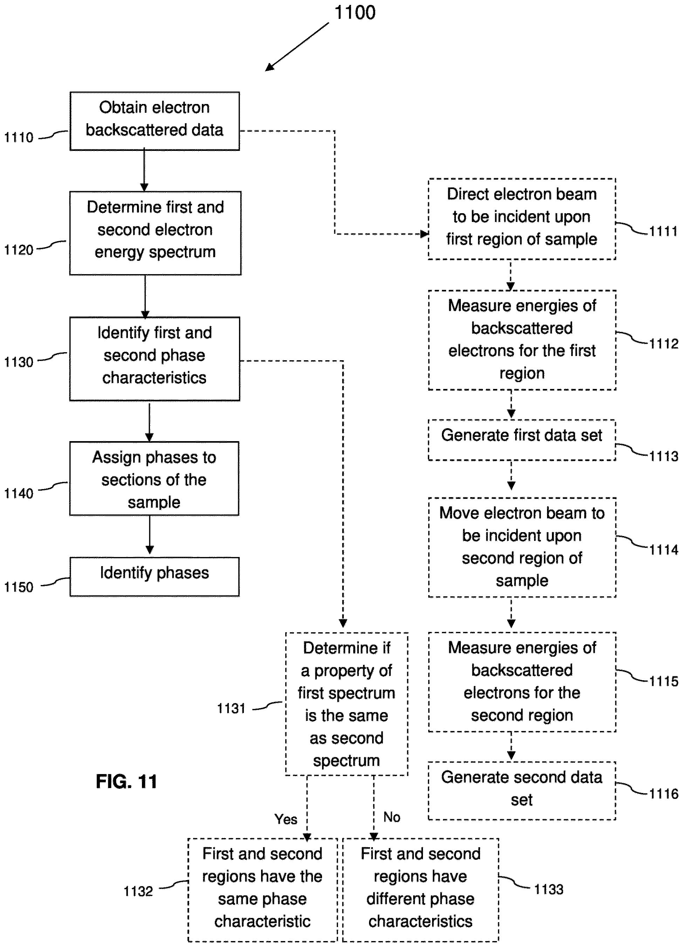

Further details of the identification step 530 are given below in reference to the methods of figures 11 - 12, but in one simple example, sample region A with energy histogram E_{A} and sample region B with energy histogram E_{B} are identified as regions with at least one property of their determined electron energy spectra the same, or substantially the same, where it is determined that at least one of their fitted property values are within 10% of each other, e.g., the fitted amplitude of their respective peaks at a chosen TOT is within 10%. In other examples, fitted property values of a user-set percentage or amount, e.g., between about 1 - 20% of each other (such as 1%, 2%, 5%, 10%, 15%, 20% etc.) or higher/lower, are also considered to be the same or substantially the same. The percentage, amount and/or range that provides an accurate representation of the same or substantially the same determined statistical electron characteristic value depends on the sample material(s). As mentioned, initial experiments can be used to determine an accurate percentage/amount/range. Any suitable percentage, amount and/or range can be chosen and such percentages/amounts/ranges may be predetermined, predicted, fixed and/or adjustable, dependent on the sample information of interest.

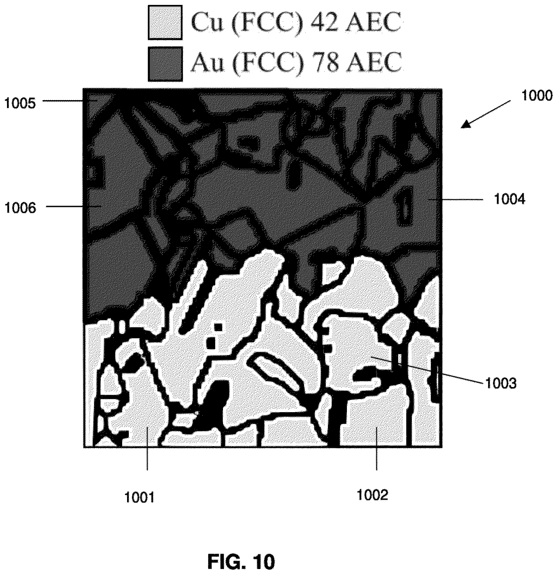

Once regions of the samples 110 having the same, or substantially the same, determined statistical electron characteristics and/or determined electron energy spectra properties have been identified, it is then possible to assign 540 phases to one or more sections of the sample 110 based on the identified respective phase characteristics, and optionally further based on reference phase data. Further details regarding phase assignment 540 are discussed below, but to summarise, sections of the sample 110 with a distinct phase can be identified by collating regions of the sample 110 having the same, or substantially the same, determined statistical electron characteristic or determined electron energy spectra property. See for example, figure 10 showing an average electron count phase map 1000 of a sample, e.g. sample 110. The lighter shaded areas (e.g., areas 1001, 1002, 1003 to name a few) of the phase map 1000 represent a section of the sample 110 with a first (distinct) phase, i.e., the collated regions having the same average electron count of 42 epp. The darker shaded areas (e.g., areas 1004, 1005, 1006 to name a few) of the phase map 1000 represent a section of the sample 110 with a second (distinct) phase, i.e., the collated regions having the same average electron count of 78 epp. Accordingly, different first and second phases are assigned to the sample 110.

Additionally, the determined statistical electron characteristic or determined electron energy spectra property can be compared to the reference data in order to identify the phases of the sample 110. The reference phase data comprises the statistical electron characteristics or electron energy spectra for known chemical compositions. For example, the reference data may include the average electron count of different elements valid for a set beam current, beam energy, detector distance, detector threshold and dwell time, e.g., aluminium: 20 epp, copper: 42 epp, gold 78 epp and so on. Such reference data may be obtained from prior experiments, databases or other suitable methods, for example using energy dispersive spectroscopy. In the example of figure 10, the section of the sample 110 producing an average electron count of 42 epp (lighter shading) can be compared to the reference data of the sample 110 to identify it as copper, and the section of the sample 110 producing an average electron count of 78 epp (darker shading) can be compared to the reference data of the sample 110 to identify it as gold. For accurate results, the reference data for the sample 110 should have been measured under the same conditions as those used in the method 500 to determine the phase characteristics. If the conditions are not the same, the reference data needs be adjusted accordingly. For example, usually, the electrons detected per pixel is linearly dependent on beam current and the time over which the detector collects data. Therefore, if a first experiment is carried out for 50ms, and then a second experiment is carried out for 25ms, the reference data should be divided by two for the second experiment. The same applies for the current. Other parameters, such as acceleration, voltage, and detector v. sample position are not always linear, which can lead to challenges with adjusting the reference data. One way to avoid this is to acquire a new set of reference data for the new experimental conditions.

Sample impurities and lattice types can affect the accuracy of the phase assignments, and so the phase identification method 500 can be further combined with EBSD pattern analysis to aid this process, as described in more detail below.

### Obtaining backscattered electron data

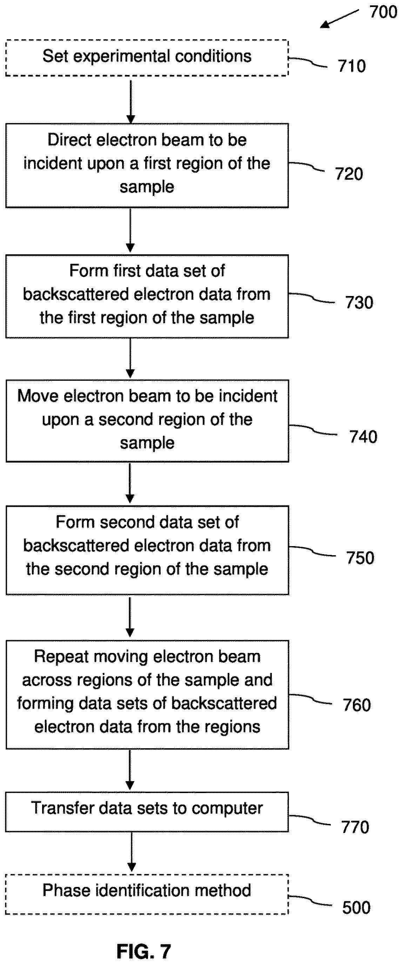

Figure 7 illustrates an exemplary method 700 for obtaining the data for use in the phase identification method 500 of figure 5. This method 700 can use direct electron counting and/or direct electron measurements, and can be carried out using the system 100 shown in figures 3 and 4, or using another suitable setup comprising a direct charged particle detector 160 as described previously. In particular, the direct charged particle detector must be capable of directly counting the number of detected electrons in each pixel of the detector array, i.e., operating in the 'counting' mode, and/or directly measuring the energies of detected electrons in each pixel of the detector array, i.e., operating in the 'time over threshold' mode.

Experimental conditions may be set 710 first in order to obtain 510 the electron backscattered data. For example, the sample of interest 110 is loaded into the sample holder 140 in the chamber 135 and set into the desired position and orientation by the manipulator 145. The electron beam column 120 is configured to move the electron beam into position under control of the controller 125 so as to align the electron beam and the sample 110 at a fixed angle. Other setup conditions may also be selected, e.g., electron beam voltage, electron beam current, sample-detector distance, map dimension and acquisition times, and applied.

The controller 125 initiates the electron beam to be directed 720 to be incident upon the sample 110. The electron beam is targeted at a first region of interest of the sample 110. For example, the surface of the sample 110 may be split into a grid of sections, with each region of interest being one or more sections of the grid. As the electron beam contacts the first region of the sample 110, some electrons from the beam are scattered towards the direct charged particle detector 160 at varying angles. Scattered electrons strike the pixels of the direct charged particle detector 160 forming a signal that can then be sent from the direct charged particle detector 160 to the computer 165 for processing. In direct electron counting examples, the direct charged particle detector 160 counts the number of electrons detected in each pixel over a set measurement time period, for example a time period between 0.1 - 200 ms, such as 0.5 ms, forming 730 a first electron count data set representative of the electron backscattering from the first region of the sample 110. In direct electron energy measurement examples, the direct charged particle detector 160 measures the energy of each detected electron over the set measurement time period, for example a time period between 0.1 - 200 ms, such as 0.5 ms, forming 730 a first electron energy data set representative of the electron backscattering from the first region of the sample 110.

After scanning the first region for the set measurement time period, the electron beam is moved 740 by the controller 125 to a second region of interest of the sample 110 and the data are collected in the same manner while the electron beam is incident on the second region. In other words, in direct electron counting examples, the direct charged particle detector 160 counts the number of electrons detected in each pixel over the set measurement time period, forming 750 a second electron count data set representative of the electron backscattering from the second region of the sample 110. In direct electron energy measurement examples, the direct charged particle detector 160 measures the energy of each detected electron over the set measurement time period, forming 750 a second electron energy data set representative of the electron backscattering from the second region of the sample 110. This process continues until all of, or at least a part of, the sample 110 has been scanned 760. Usually, the electron beam is scanned across tens of thousands to millions of regions of the sample 110.

The data sets (whether comprising electron counts and/or electron energies) are transferred 770 to the computer 165 for processing. In the direct counting mode, the data are sent as a full frame read-out at the end of each set measurement time period. In the direct energy measurement mode, the direct charged particle detector 160 continues to transfer the detected electron data to the computer 165 in a continuous manner as each electron is detected.

If all other conditions are kept constant during the process (e.g., the beam current, beam voltage, stage bias, stage position, energy threshold, dwell time (i.e., the measurement time period over which the beam illuminates one region of the sample) etc., the electron counts and/or measured electron energies will vary based on one or more of the following: crystal orientation, atomic number, or beam obstruction by a defect (for example, a hole/crack in the sample). As discussed above, this variance can be used to aid in distinguishing the crystalline phases.

After the backscattered electron data has been collected and transferred to the computer 165 for processing, the phase identification method 500 can be used to distinguish between phases. In addition, the collected data can be used to generate EBSD patterns. Generating such patterns is well known and so will not be described here for brevity, but such EBSD patterns can be used to aid the phase identification process, particularly where sample impurities and lattice types can affect the identification process, as described below.

### Phase identification method using direct electron counting

Figure 8 illustrates an exemplary method 800 of identifying phase characteristics of a sample using direct electron counting. This method provides a more detailed example of the phase identification method 500 of figure 5. In this example, the method 800 is described using the (mean or modal) average electron count as the statistical electron characteristic. However, this method 800 works in exactly the same way when using the median electron count, the quantile electron count or the total electron count as the statistical electron characteristic. As such, for brevity, these versions are not described here. However, it is to be noted that the average electron count can simply be replaced by the median electron count, the quantile electron count or the total electron count in each step below and similar results would be achieved.

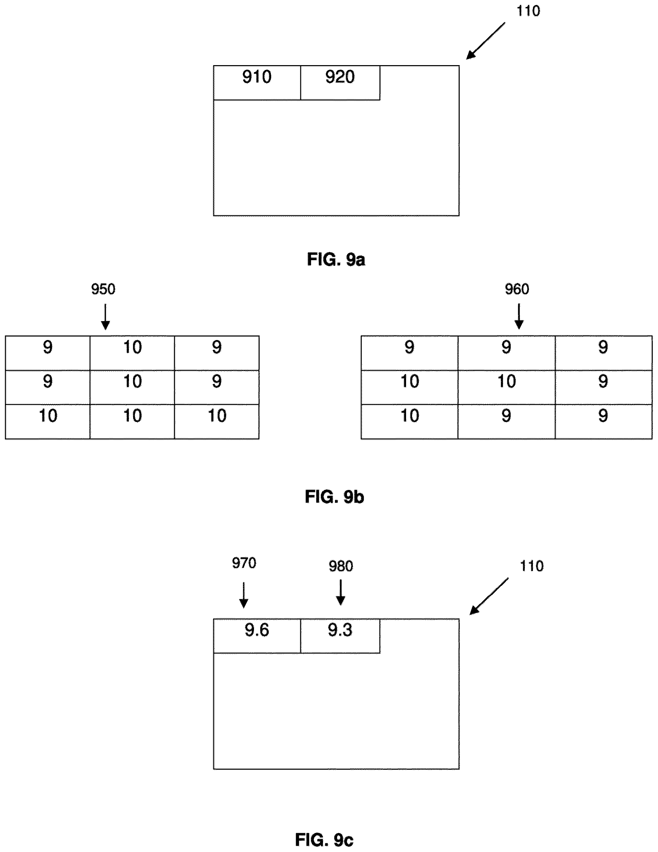

In a first step, the electron backscattered data is obtained 810 from the sample 110, i.e., using the method 700 of figure 7 or another suitable method of obtaining the electron backscattered data. The electron beam is directed 811 to be incident upon a first region 910 of the sample 110 and the number of backscattered electrons detected by each pixel of the array for the first region 910 of the sample 110 is determined 812. As already discussed, the electron beam is incident on the first region 910 for a set measurement time period, for example 0.5 ms. A first data set 950 comprising the number of backscattered electrons detected by each pixel of the array for the first region 910 of the sample 110 over the set measurement time period is generated 813. The electron beam is them moved 814 to be incident upon a second region 920 of the sample 110, and the above steps are repeated: the number of electrons detected by each pixel of the array for the second region 920 of the sample 110 is determined 815, and a second data set 960 comprising the number of backscattered electrons detected by each pixel of the array for the second region 920 of the sample 110 over the set measurement time period is generated 816. Figure 9a illustrates an exemplary sample 110 with first region 910 and second region 920 indicated. Examples of the data sets 950, 960 indicating the counted number of backscattered electrons detected in each pixel over the set measurement time period for the first and second regions 910, 920 are shown in figure 9b (in this case, a 3x3 array of pixels is shown for simplicity). As mentioned previously, when running the phase identification method, hundreds of thousands to millions of regions of the sample 110 are analysed. However, this exemplary method is described/shown for only a couple of the regions 910, 920 and with simplified values for the reader's ease of understanding and for brevity.

Next in the method 800, a first average electron count 970 for the first data set 950 and a second average electron count 980 for the second data set 960 is determined 820. To determine the average electron counts 970, 980, an average across the whole array of pixels for each region 910, 920 is calculated. In this case, the mean average is calculated, but the modal average may be calculated instead. The mean average electron counts 970, 980 for the first and second regions 910, 920 are shown superimposed over the sample 110 in figure 9c, with values of 9.6 and 9.3 epp respectively. As mentioned above, the average electron count values could be directly replaced with any of the median/quantile/total electron count.

Following this step, a first phase characteristic for the first region 910 and a second phase characteristic for the second region 920 of the sample 110 are identified 830. The identifying 830 comprises determining 831 if the first average electron count 970 is the same, or substantially the same, as the second average electron count 980. If so, the first and second regions 910, 920 of the sample 110 can be identified 832 as having the same phase characteristic. If not, the first and second regions 910, 920 of the sample 110 can be identified 833 as having different phase characteristics. Usually, average electron counts within about 5% or so of each other are considered to be the same, or substantially the same ). In other examples, average electron counts of a user-set percentage or amount, e.g., between about 1 - 20% of each other (such as 1%, 2%, 5%, 10%, 15%, 20% etc.) or higher/lower, are also considered to be the same or substantially the same. The percentage value or amount and/or range that provides an accurate representation of the same or substantially the same determined statistical electron characteristic value can depend on the sample material(s). As mentioned, initial experiments can be run on samples of known composition(s) in order to determine an idea of the percentage(s)/amount(s)/range(s) that accurately reflects the material. Any suitable percentage, amount or range can be chosen and such percentages/amounts/ranges may be predetermined, predicted, fixed and or/ adjustable, dependent on the sample information of interest.

Sections of the sample 110 having the same, or substantially the same, phase characteristics can be assigned 840 a distinct phase. In this case, an assigned section is a section of the sample 110 comprised of collated regions that have the same or substantially the same average electron count (or in other examples, the same or substantially the same median/quantile/total electron count). See the phase map 1000 of figure 10 showing a sample with two distinct phases illustrated by the lighter and darker shaded sections. E.g., the lighter section is comprised of the collated regions having the same average electron count of 42 epp. The darker section is comprised of the collated regions having the same average electron count of 78 epp.

As explained in relation to method 500, if reference data is available then the determined average electron counts can be compared to the reference data to identify 850 the phases, e.g., to establish that the lighter shaded section is copper (42 epp) and the darker shaded section is gold (78 epp).

### Phase identification method using direct electron energies

Figure 11 illustrates an exemplary method 1100 of identifying phase characteristics of a sample 110 using direct electron energy measurements. This method 1100 provides a more detailed example of the phase identification method 500 of figure 5. In this case, the energy of each electron arriving at each pixel of the direct charged particle detector 160 is measured, rather than the number of electrons arriving at each pixel, as was explained with reference to method 800 and figures 8-10.

First, the electron backscattered data is obtained 1110, i.e., using the method 700 of figure 7 or another suitable method of obtaining the electron backscattered data. The electron beam is directed 1111 to be incident upon a first region 910 of the sample 110, and the energies of backscattered electrons detected by each pixel of the array for the first region 910 of the sample 110 are measured 1112 over a set measurement time period, for example 0.5 ms. A first data set 950 comprising the measured energies of backscattered electrons detected by each pixel of the array for the first region 910 of the sample 110 is then generated 1113. The electron beam is moved 1114 to be incident upon a second region 920 of the sample 110, and the above steps are repeated: the energies of backscattered electrons detected by each pixel of the array for the second region 920 of the sample are measured 1115 and a second data set 960 comprising the measured energies of backscattered electrons detected by each pixel of the array for the second region 920 of the sample 110 is generated 1116.

Next in the method 1100, a first electron energy spectrum for the first data set 950 and a second electron energy spectrum for the second data set 960 are determined 1120. For example, the energy spectrum may be a histogram of the detected electron energies generated using a standard histogram potting procedure, i.e., the measured energies are allocated to their appropriate energy bin to plot the histogram. An exemplary electron energy histogram is shown in figure 6.

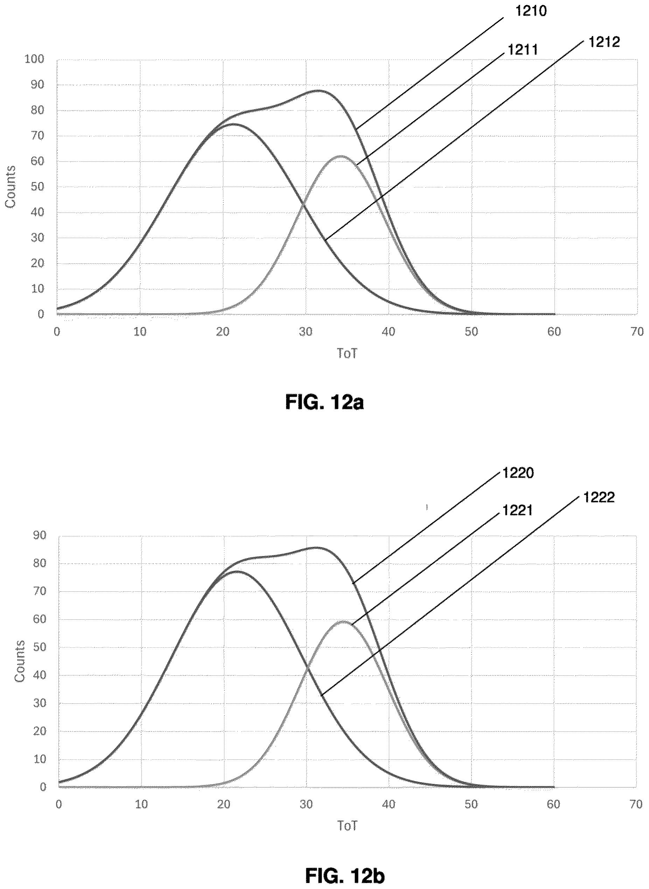

Following this, a first phase characteristic for the first region 910 and a second phase characteristic for the second region 920 are identified 1130 by determining 1131 if at least one property of the first energy spectrum is the same, or substantially the same, as at least one corresponding property of the second energy spectrum. If so, the first and second regions of the sample 110 can be identified 1132 as having the same phase characteristic. If not, the first and second regions of the sample 110 can be identified 1133 as having different phase characteristics. As part of this determination 1131, one or more properties of the spectra are compared. For example, the peak heights, skewness, the sum and the range are compared for similarities. As described below in relation to figures 12a and 12b, functions can be fitted to the determined energy spectra and their fitted property values compared for similarities to identify regions having the same, or substantially the same, phase characteristic.

Sections of the sample 110 having the same, or substantially the same, phase characteristics can be assigned 1140 a distinct phase. In this case, an assigned section is a section of the sample 110 comprised of collated regions that have the same or substantially the same electron energy spectra property or properties. As explained in relation to method 700, if reference data is available then the determined electron energy spectra can be compared to the reference data to identify 850 the phases.

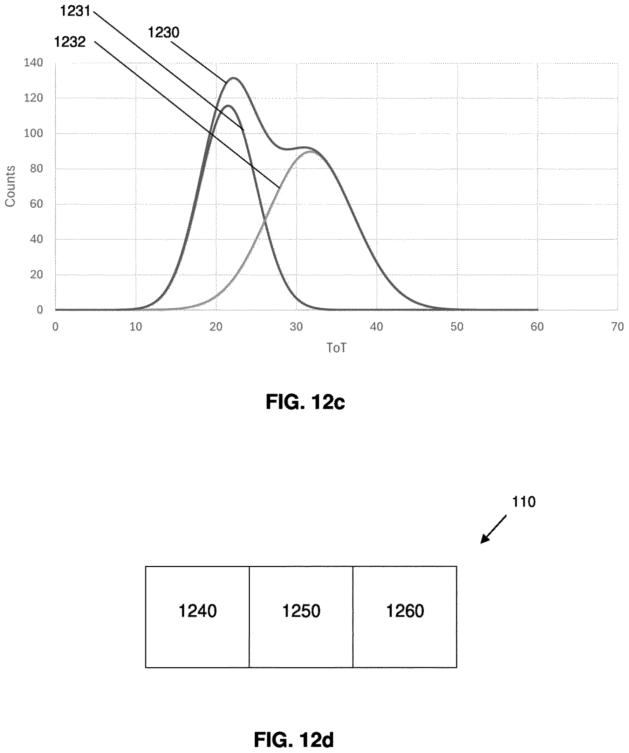

As an example of the method 1100, figures 12a - 12c illustrate simulated spectra 1210, 1220, 1230 that represent the determined backscattered electron energy spectra for three regions 1240, 1250, 1260 of a sample, e.g., sample 110. Figure 12d illustrates the three respective regions 1240, 1250, 1260 of the sample 110. Spectrum 1210 is representative of backscattered electron data obtained from region 1240, spectrum 1220 is representative of backscattered electron data obtained from region 1250, and spectrum 1230 is representative of backscattered electron data obtained from region 1260. In this case, the spectra 1210, 1220, 1230 of figures 12a - 12c are each the sum of two peaks, e.g., for spectrum 1210: peaks 1211 and 1212, for spectrum 1220: peaks 1221 and 1222, and for spectrum 1230: peaks 1231 and 1232. Each spectrum may comprise the sum of one or more peaks, depending on the sample material. A function can be fitted to the spectra 1210, 1220, 1230 to generate fitted property values for the comparison in step 1130 of method 1100. E.g., a least square minimization method can be used to fit gaussian peaks to each of the spectra 1210, 1220, 1230. Fitted properties of each peak of the spectra 1210, 1220, 1230, e.g., the expected value, variance, FWHM and peak height, are then determined from the fitting. The fitted property values of the first spectrum 1210 for region 1240 are compared to the corresponding fitted property values of the second spectrum 1220 for region 1250. Similarly, the fitted property values of the third spectrum 1230 for region 1240 are compared to the corresponding fitted property values of one or both of the first and second spectra 1210, 1220 for regions 1240, 1250 respectively. As can be seen in figures 12a and 12b, first and second spectra 1210, 1220 have a respective peak amplitude of about 88 and 86 at TOT value 33. Since these peak amplitudes are within about 10% of each other, they signify that spectra 1210 and 1220 have phase characteristics that are substantially the same. Accordingly, the regions 1250, 1260 of the sample 110 is identified as having the same phase. On the other hand, as can be seen from figure 12c, the third spectrum 1230 has a respective peak amplitude of about 125 at TOT value 23. Since this peak amplitude is not within about 10% of either of the peak amplitudes of spectra 1210 and 1220, this signifies that spectrum 1230 has phase characteristics that are that are not the same, or not substantially the same, as those of spectra 1210 and 1220. Accordingly, the region 1260 of the sample 110 is identified as having a different phase to that of regions 1240 and 1250. As mentioned, if reference data is available then the spectra can be compared to the reference data to identify 850 the phases. Using the peak amplitude provides just one example of how the spectra may be compared. Other properties, such as the skewness, sum and range etc., can also be compared in a similar manner to help distinguish the sample phases.

### Phase assignment method

As already described, it can be challenging to differentiate phases using EBSD patterns alone. For example, in a sample comprising grains of platinum and copper, the EBSD patterns resulting from backscattered electron data of this sample are not sufficient to distinguish between the two elements because both platinum and copper crystallize in the face-centered cubic (FCC) lattice, and therefore they produce very similar patterns. However, due to their different atomic numbers, they produce different amounts of backscattered electrons (e.g., 50 epp for nickel and 105 for platinum, as can be seen in figure 2a), and so, as discussed in the methods above, it is possible to distinguish nickel regions from platinum regions using the determined average electron counts (or other determined statistical electron characteristic or determined electron energy spectra). For example, regions of the sample producing a count of about 50 epp are assigned a nickel phase, and regions of the sample producing about 105 epp are assigned a platinum phase.

However, some elements can crystalise in different crystal structures. For example, iron can crystalise in both the body-centered cubic (BCC) and the face-centered cubic (FCC) lattice phase depending on conditions, but its chemical composition remains the same. This can make it challenging to distinguish between iron (BCC) and iron (FCC) using direct electron counting/electron energy measurements alone, since the counts/spectra will be approximately the same for both lattices, making the phases indistinguishable.

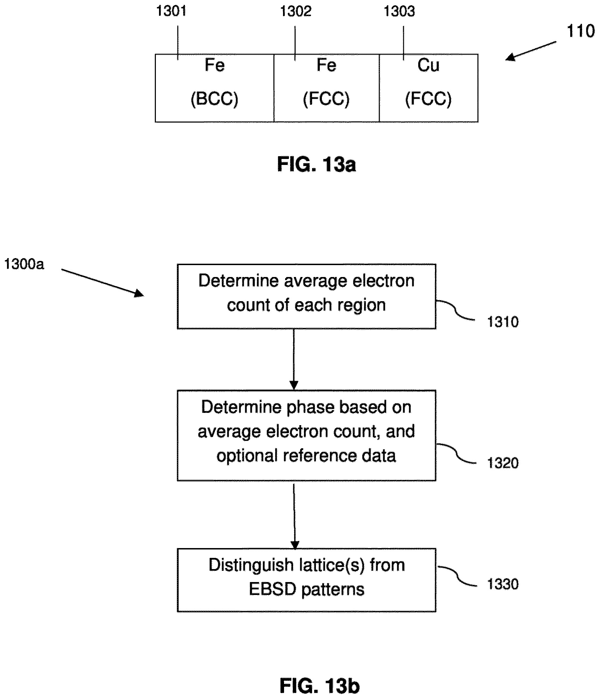

To overcome this issue, direct electron counting and/or electron energy measurements (i.e., the methods 500, 800, 1100 of figures 5, 8 and 11 discussed above) can be combined with information from ESBD patterns to accurately assign phases. In one example, a sample 110 comprises three regions 1301, 1302, 1303. In this example, the sample is known to be comprised of iron and copper, but the phases of the three regions are currently unknown and to be determined. For the reader's ease of understanding this example, the regions are as follows: region 1301 of iron (BCC), region 1302 of iron (FCC) and region 1303 of copper (FCC), as shown in figure 13a.

In a first exemplary method 1300a, illustrated in figure 13b, phases can be assigned to the three regions 1301, 1302, 1303 as follows. Firstly, any one of the methods 500, 800, 1100 of figures 5, 8 or 11 can be used to determine whether each region 1301, 1302, 1303 is iron or copper based on the determined statistical electron characteristics/electron energy spectra. For example, the average electron counts of each region 1301, 1302, 1303 are determined 1310 and then compared 1320 to find which regions have the same average electron count, as per methods 500/800/1100. In this case, two regions 1301, 1302 are found to have the same average electron count, and one region 1303 is found to have a different average electron count. By comparing with known reference data, it can be established that regions 1301 and 1302 are iron, based on their average electron count of about 44, and region 1303 is copper, based on its average electron count of about 55.

Then, EBSD patterns of the sample 110 can be analysed to distinguish 1330 the two iron regions 1301, 1302 into BCC lattice and FCC lattice. For example, the bands in the pattern are analysed, and based on the angles between them, it is possible to match them to theoretical angles of a perfect unit cell to estimate which lattice type is the best fit. As each orientation (rotation in 3D space) of the unit cell produces different EBSD patterns, it is possible to determine the lattice orientations. EBSD indexing is well-known in the art and so is not described here for brevity.

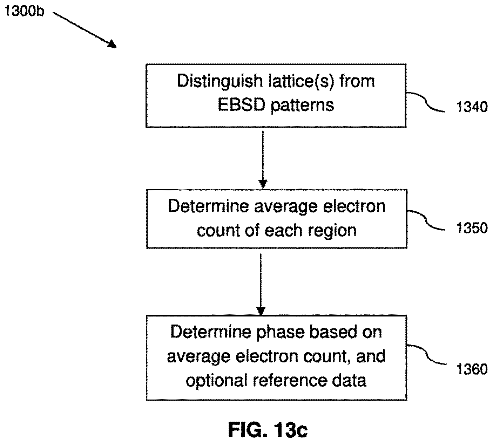

In a second exemplary method 1300b, shown in figure 13c, phases can be assigned to the three regions 1301, 1302, 1303 in a reverse manner to the method 1300a of figure 13b (i.e., analysing the EBSD patterns first). In this method 1300a, firstly, EBSD patterns of the sample 110 are analysed to distinguish 1340 the regions, e.g., two regions 1301, 1302 of the sample 110 are found to have the FCC lattice, and one region 1303 has the BCC lattice. As mentioned above, this is done by analysing the bands in the pattern, and based on the angles between them, matching the angles to theoretical angles of a perfect unit cell to estimate which lattice type is the best fit.

Then, any one of the methods 500, 800, 1100 of figures 5, 8 or 11 can be used to determine whether the regions 1301, 1302, 1303 are iron or copper. For example, the average electron counts of each region are determined 1350 and compared 1360 to find which regions have the same average electron count. In this case, the two FCC regions 1301, 1302 have different average electron counts, and so are made of different material. By optionally comparing with known reference data, it can be established that region 1302 is iron based on its average electron count of about 44, and region 1303 is copper based on its average electron count of about 55. Since there is only one BCC region 1301 in this example, the iron (BCC) region 1301 is already known without requiring the direct electron counting/electron energy measurement steps, but in other examples, where there are multiple BCC lattice regions, these steps can be used to distinguish the lattices.

The above-described methods can account for intensity variance in the electron backscattered data, and compensate for orientation differences in the sample 110. For example, the crystallographic contrast caused by orientation can bring a variation (of approximately 10%) in intensity. This can be mitigated after initial estimation of the backscattering amount. For example, datapoints on each crystal lattice are measured and then orientations are determined using standard EBSD processes. These orientations are paired with the average electron counts to establish how the average electron count changes based on the orientation. For example, in one orientation of the crystal lattice in 3D space, the average electron count may be 45.3 epp, and in a second orientation is 47.7 epp. From this, it is then possible to correct for the orientation differences.

Although specific embodiments have now been described, the skilled person will understand that various modifications and variations are possible without departing from the scope of the present invention that is defined by the appended claims.

## Claims

1. A method of identifying phase characteristics of a sample, the method comprising:
obtaining backscattered electron data of the sample using a direct charged particle detector comprising an array of pixels and configured to count the number of backscattered electrons, or to measure the energy of each backscattered electron, detected by each pixel of the array when an electron beam is incident upon the sample, the backscattered electron data comprising data sets, each data set comprising the number of, or the measured energies of, the backscattered electrons detected by each pixel of the array when the electron beam is incident upon a respective region of the sample;
determining, for each data set, a respective statistical electron characteristic or a respective electron energy spectrum; and
identifying a respective phase characteristic for at least some of the regions of the sample, based on the determined statistical electron characteristics or the determined electron energy spectra.

2. The method of claim 1, wherein the determined statistical electron characteristic is one of, or is based on one of: a determined average electron count, a determined median electron count, a determined quantile electron count or a determined total electron count.

3. The method of claim 2, wherein:
the determined average electron count is the average value determined from all of the pixels of the array when the electron beam is incident upon a region of the sample;
the determined median electron count is the median value determined from all of the pixels of the array when the electron beam is incident upon a region of the sample;
the determined quantile electron count is a selected quantile determined from all of the pixels of the array when the electron beam is incident upon a region of the sample; and
the determined total electron count is the total value determined from all of the pixels of the array when the electron beam is incident upon a region of the sample.

4. The method of any preceding claim, wherein the determined statistical electron characteristic is dependent on chemical composition and/or crystal orientation of phases in the sample, and optionally, wherein the determined statistical electron characteristic increases with atomic number.

5. The method of any preceding claim, wherein identifying the respective phase characteristic for each of the regions of the sample, based on the determined statistical electron characteristic, comprises:
identifying the regions of the sample that have the same, or substantially the same, determined statistical electron characteristic.

6. The method of claim 5, further comprising assigning a phase to at least one section of the sample based on the identified respective phase characteristics, and optionally further based on reference phase data, the reference phase data comprising statistical electron characteristics for known chemical compositions.

7. The method of any preceding claim, wherein obtaining the electron backscattered data comprises:
directing the electron beam to be incident upon a first region of the sample;
determining the number of backscattered electrons detected by each pixel of the array for the first region of the sample;
generating a first data set comprising the number of backscattered electrons detected by each pixel of the array for the first region of the sample;
moving the electron beam to be incident upon a second region of the sample;
determining the number of electrons detected by each pixel of the array for the second region of the sample; and
generating a second data set comprising the number of backscattered electrons detected by each pixel of the array for the second region of the sample.

8. The method of claim 7, wherein determining, for each data set, the respective statistical electron characteristic comprises determining a first statistical electron characteristic for the first data set and determining a second statistical electron characteristic for the second data set.

9. The method of claim 8, wherein identifying the respective phase characteristic for at least some of the regions of the sample, based on the determined statistical electron characteristics, comprises:
determining if the first statistical electron characteristic is the same, or substantially the same, as the second statistical electron characteristic;
if the first statistical electron characteristic is the same, or substantially the same, as the second statistical electron characteristic, identifying that the first and second regions of the sample are the same phase; or
if the first statistical electron characteristic is not the same, or not substantially the same, as the second statistical electron characteristic, identifying that the first and second regions of the sample are different phases.

10. The method of claim 9, wherein assigning the phase to at least one section of the sample based on the identified respective phase characteristics comprises:
if the first statistical electron characteristic is the same, or substantially the same, as the second statistical electron characteristic, assigning the same phase to a section of the sample that includes the first and second regions of the sample, or
if the first statistical electron characteristic is not the same, or not substantially the same, as the second statistical electron characteristic, assigning different phases to sections of the sample, a first phase being assigned to a first section of the sample that includes the first region of the sample, and a second, different phase being assigned to a second section of the sample that includes the second region of the sample.

11. The method of claim 1, wherein the determined electron energy spectrum is a histogram of the measured energies of the backscattered electrons detected by each pixel of the array when the electron beam is incident upon a region of the sample.

12. The method of claim 1 or claim 11, wherein the determined electron energy spectrum is dependent on chemical composition and/or crystal orientation of phases in the sample.

13. The method of any one of claims 1, 11 or 12, wherein identifying the respective phase characteristic for each of the regions of the sample, based on the determined electron energy spectra, comprises identifying the regions of the sample that have at least one property of their determined electron energy spectrum that is the same, or substantially the same, as at least one corresponding property of the determined electron energy spectrum of other regions of the sample; and optionally
wherein the identifying comprises comparing one or more properties of the energy spectra, including any of: the peak heights, skewness, the sum and the range.

14. A computer program comprising instructions that, when the computer program is executed by a computer, cause the computer to carry out the method of any preceding claim.

15. A system for identifying phase characteristics in a sample, the system comprising:
an electron beam generator configured to provide an electron beam towards a sample;
a sample holder configured to hold the sample;
a direct charged particle detector comprising an array of pixels and configured to count the number of backscattered electrons, or to measure the energy of each backscattered electron, detected by each pixel of the array; and
a processing device communicatively coupled to the direct charged particle detector and configured to perform the method of any one of claims 1-13.
